(19) **Europäisches Patentamt**

**European Patent Office**

**Office européen des brevets**

(11) Veröffentlichungsnummer: **0 000 543**
**B1**

(12) # EUROPÄISCHE PATENTSCHRIFT

(45) Veröffentlichungstag der Patentschrift:
**28.01.81**

(51) Int. Cl.³: **F 24 J 3/02**

(21) Anmeldenummer: **78100438.7**

(22) Anmeldetag: **19.07.78**

(54) **Bausatz für Klimadächer oder Klimafassaden und seine Verwendung als Verdampfer.**

(30) Priorität: **27.07.77 DE 2733899**

(43) Veröffentlichungstag der Anmeldung:
**07.02.79 Patentblatt 79/3**

(45) Bekanntmachung des Hinweises auf die Patenterteilung:
**28.01.81 Patentblatt 81/4**

(84) Benannte Vertragsstaaten:
**BE CH DE FR GB LU NL SE**

(56) Entgegenhaltungen:
**FR-A-1 073 253**
**FR-A-2 302 489**
**FR-A-2 317 603**
**FR-A-2 330 974**
**US-A-2 689 090**
**US-A-2 693 939**
**US-A-3 339 629**
**US-A-3 952 725**
**US-A-4 000 850**
**US-A-4 028 854**

(73) Patentinhaber: **Wohlwend, Gertraud, Im Hofi 590,**
**FL-9497 Triesenberg (LI)**

(72) Erfinder: **Lex, Hans J., Tengstrasse 44,**
**D-8000 München 40 (DE)**

(74) Vertreter: **Liedl, Gerhard et al, Steinsdorfstrasse 21-22,**
**D-8000 München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchgebühr entrichtet worden ist (Art. 99(1) Europäisches Patentübereinkommen).

Bausatz für Klimadächer oder Klimafassaden und seine Verwendung als Verdampfer

Die Erfindung betrifft einen Bausatz für Klimadächer oder Klimafassaden, die von einem Wärmeaustauschmedium durchströmt werden, mit Blechbahnen und Leitungen, welche sich in wärmeleitendem Kontakt mit denselben befinden, wobei die freien Enden der Leitungen je an einem Vorlaufsammler bzw. einem Rücklaufsammler angeschlossen sind.

Das das Dach durchströmende Wärmeaustauschmedium kann bei einem Klimadach, ohne dass Änderungen am Dach selbst erforderlich sind, für verschiedene Zwecke ausgenützt werden, z.B. für folgende

a) Kühlung von Behelfsbauten, z.B. bei Einsatz in heissen Katastrophengebieten, Kühlung von Fabrikhallen, Krankenhäusern und anderen Gebäuden, bei denen der unmittelbar unter dem Dach liegende Raum ausgenützt wird;

b) Wärmegewinnung aus dem Dach, z.B. zur Aufheizung von Schwimmbädern, wobei sich z.B. eine Verkürzung der Aufheizzeit eines Schwimmbades bei einem üblichen Wohnhaus im Faktor 1:10 ergibt;

c) Gewinnung von Wärme aus der einfallenden Sonneneinstrahlung und aus der das Dach überstreichenden Luft mittels einer Wärmepumpe, z.B. zwecks Aufheizung des Gebrauchswassers oder für Raumheizungszwecke, bis hinab z.B. auf minus 5 °C oder minus 10 °C Aussentemperatur;

d) Aufheizung des unter dem Gebäude liegenden Erdbodens oder anderer Bodenpartien in den Sommermonaten zwecks Wärmegewinnung mittels einer Wärmepumpe aus dem Erdboden in den Wintermonaten;

e) selbsttätige Schneeabtauung in schneereichen Gegenden durch Beheizung des Daches mittels des Wärmeaustauschmediums;

f) grossflächige Verdampfung im Klimadach im Rahmen eines Wärmepumpensystems;

g) grossflächige Wärmeabgabe im Klimadach im Rahmen eines Kühlsystems.

Die Wärmegewinnung aus Grundwasser hat sich infolge der Gefahr von Grundwasserverschmutzung als problematisch erwiesen. Bei der Wärmegewinnung aus Seewasser sind Anlagen erforderlich, die leicht verschmutzen können, sich in grosse Tiefen erstrecken müssen und von der Schiffahrt leicht beschädigt werden können. Bei der Wärmegewinnung aus Flusswasser besteht – abgesehen von der Verschmutzungsgefahr – die Gefahr der Beschädigung durch treibende Baumstämme oder dgl. Bei der Wärmegewinnung von auf freiem Feld aufgestellten Kollektoren ergeben sich Probleme hinsichtlich der Beeinträchtigung der Landschaft und des Wegfalls von landwirtschaftlich nutzbarem Grund.

Aus diesem Grunde konzentrieren sich die Energieprobleme auf die Wärmegewinnung aus Dächern. Dabei stellt sich das Problem, einen Bausatz zu schaffen, der sich universell an Dächer verschiedener Abmessungen anpassen lässt und bei dem keine Konflikte mit anderen erforderlichen Bauelementen, z.B. der Dachtraufe oder dgl., entstehen. Weiterhin lässt sich bei den bekannten Klimadächern nur schwer ein gleichmässiger Durchfluss des Wärmeaustauschmediums über die gesamte, oftmals sehr grosse Dachfläche hinweg gewährleisten.

Aus der US-PS 4 000 850 ist ein sonnengeheiztes und gekühltes Haus bekannt geworden, dessen die Wände und das Solardach tragendes Gerippe aus einem Rohrsystem besteht, das von zwei Wärmeaustauschmedien durchströmt wird. Das Dach besteht aus zwei vorgefertigten Blechtafeln, welche im Abstand voneinander gehalten werden und die dementsprechend zwischen sich Durchflusskanäle für ein Wärmeaustauschmedium bilden. Die Zuleitung des Wärmeaustauschmediums erfolgt durch einen im Dachfirst liegenden Strang. Die Ableitung erfolgt durch einen Strang, welcher an der Dachtraufe angeordnet ist.

Da das Rohrsystem das eigentliche Grundgerippe des Hauses bildet, ist die Konstruktion nur sinnvoll für Fertighäuser mit definierten Abmessungen, die gegebenenfalls wieder abgebaut und an anderer Stelle aufgebaut werden können. Die Konstruktion lässt sich jedoch nur schwer an Häuser anpassen, die entsprechend den örtlichen Bauvorschriften in unterschiedlichem Baustil oder in unterschiedlicher Grösse, gegebenenfalls in Ziegelbauweise, errichtet werden sollen. In ähnlicher Weise scheidet die Konstruktion beispielsweise zur Abdeckung grösserer Fabrikhallen oder dgl. aus. Ebensowenig ist es möglich, die Konstruktion in bereits bestehende fertige Häuser nachträglich einzubauen.

Es ist weiterhin aus der FR-A-2 302 489 ein Solardach bekannt geworden, bei dem unter einer Ziegelabdeckung eine Rohrschlange angeordnet ist, welche aus langen geraden und entsprechenden halbkreisförmigen gekrümmten Teilen besteht.

Der Anmeldung liegt die Aufgabe zugrunde, einen Bausatz für Klimadächer oder Klimafassaden in der Weise zu verbessern, dass die Konstruktion an beliebige Häuser angepasst bzw. in bereits fertige Häuser eingebaut werden kann.

Die Lösung der Aufgabe ergibt sich aus den kennzeichnenden Merkmalen des Anspruches 1.

Der Zuleitungsstrang für das Wärmeaustauschmedium, der Ableitungsstrang sowie vorzugsweise ein Druckausgleichsstrang sollen in den Dachfirst oder an die höchste Stelle des Daches oder des zu klimatisierenden Bereiches des Daches verlegt werden. An diese Stränge sind im Abstand voneinander sich in Richtung der Dachtraufe oder der Dachtraufen erstreckende haarnadelförmig gebogene Leitungen angeschlossen. Dadurch wird gewährleistet, dass jede der Leitungen von demselben Strömungsdruck beaufschlagt wird, woraus sich ein gleichmässiger Durchfluss des Wärmeaustauschmediums durch das gesamte Klimadach ergibt. Wenn bei Dächern mit längerem Dachfirst ein Druckabfall mit steigender Entfernung von der Anschlusstelle auftritt, sorgt ein Ausgleichsstrang für den Ausgleich des Druckabfalls. Der Dachtraufenbereich bleibt frei von Zu- oder Ableitungen, so dass dort jede gewünschte architektonische Lösung gewählt werden kann. Ausserdem werden auf diese Weise Beschädigungen durch abrutschenden Schnee, Vereisen oder dgl. vermieden. Durch diese Lösung wird weiterhin eine einwandfreie Entlüftung des Systems ermöglicht. Durch diesen Aufbau wird auch ermöglicht, dass das Klimadach als grossflächiger Verdampfer betrieben werden kann.

Gemäss einer bevorzugten Ausführungsform sind Krümmungsbereiche in den Blechen oder an den Rändern der Bleche gebildet. Die Bleche sind also nicht eben, sondern in sich so verformt, dass sie Anlageflächen für die Rohre der Leitungen bilden, so dass ein entsprechend guter Wärmeübergang gesichert ist. So können insbesondere die Ränder der Auflagebleche mindestens halbkreisförmig nach oben und die Ränder der Abdeckbleche halbkreisförmig nach unten abgebogen sein. Die abgebogenen Randbereiche umgreifen je einen Teil des Rohrumfangs. Bei dieser Ausführungsform dienen die Rohre also zusätzlich als Haltemittel und Verbindungsmittel für die Bleche.

Weitere bevorzugte Ausführungsformen der Erfindung ergeben sich aus den Unteransprüchen.

Auf den Zeichnungen sind bevorzugte Ausführungsformen des Gegenstandes der Erfindung dargestellt. Es zeigen:

Fig. 1 eine schaubildliche Ansicht der Montage des Bausatzes gemäss der Erfindung auf einem Dach;

Fig. 2 eine Draufsicht auf ein Auflageblech;

Fig. 3 einen Querschnitt längs der Linie III—III in Fig. 2;

Fig. 4 das Ende eines Abschlussauflagebleches;

Fig. 5 eine schaubildliche Ansicht eines Abschlussabdeckbleches von unten;

Fig. 6 einen Querschnitt durch die Verbindungsstelle der Rohrleitung mit dem im Dachfirst verlaufenden Strang;

Fig. 7 eine schaubildliche, zum Teil ausgebrochene Draufsicht auf eine weitere Ausführungsform eines Klimadaches gemäss der Erfindung;

Fig. 8 einen Schnitt durch eine spezielle Ausführungsform eines Bauelementes gemäss der Erfindung;

Fig. 9 einen Schnitt einer abgewandelten Ausführungsform eines Bauelementes;

Fig. 10 einen Vertikalschnitt durch den Dachtraufenbereich;

Fig. 11 eine Draufsicht auf eine weitere Ausführungsform eines Bauelementes;

Fig. 12 einen Schnitt längs der Linie XII—XII in Fig. 11;

Fig. 13 einen Schnitt zur Veranschaulichung der Montage der Bauelemente gemäss Fig. 11;

Fig. 14 eine Draufsicht auf ein Bauelement mit dachziegelförmiger Oberflächenstruktur;

Fig. 15 eine Schnittansicht längs der Linie XV–XV in Fig. 14 und

Fig. 16 einen Schnitt längs der Linie XVI–XVI in Fig. 14.

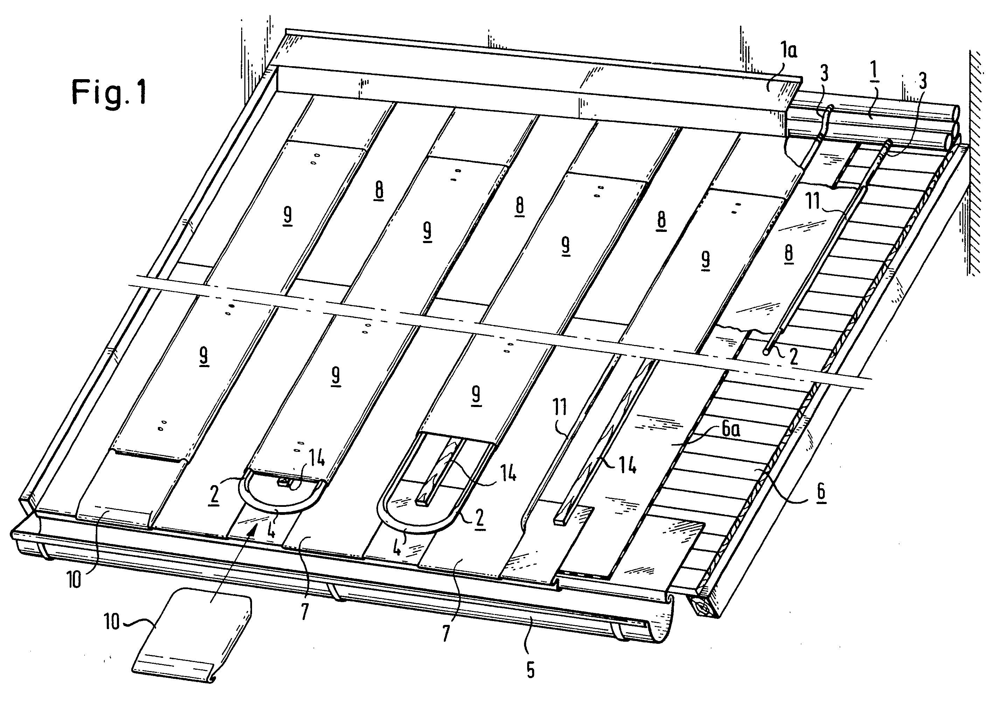

Bei den dargestellten Ausführungsformen besteht der im Dachfirst oder an der höchsten Stelle des Daches oder des klimatisierten Bereiches des Daches verlaufende Sammler aus einem drei Kanäle besitzenden Strang 1, dem ein Firstabdeckungsblech 1a zugeordnet ist. Die Kanäle des Stranges 1 dienen dem Zustrom eines Wärmeaustauschmediums, welches aus einer Flüssigkeit, wie Wasser oder Sole, oder auch aus einem Gas, z.B. Frigen, bestehen kann, sowie der Rückführung des Wärmeaustauschmediums. Der dritte Strang dient dem Druckausgleich. Wenn also beispielsweise entsprechend der Darstellung in Fig. 1 die Anschlusstelle für die Zuleitung und Ableitung des Wärmeaustauschmediums an der rechten Seite liegt, dann endet an der linken Seite der der Rückführung des Wärmeaustauschmediums dienende Strang blind, also geschlossen. Die beiden der Zuführung des Wärmeaustauschmediums dienenden Stränge sind an der linken Seite miteinander verbunden. Die Rückführung und Zuführung des Wärmeaustauschmediums kann jedoch vertauscht werden. Es ergibt sich auf diese Weise ein gleichmässiger Strömungswiderstand über die gesamte zu klimatisierende Fläche.

Weiterhin sind haarnadelförmig ausgebildete Leitungen 2 vorgesehen, deren Schenkel über Schlauchstücke 3 und zugeordnete Schlauchbinder einerseits mit einem der Sammlervorlaufkanäle und andererseits mit dem blind endenden Sammlerrücklaufkanal des Stranges 1 verbunden sind. Die haarnadelförmig ausgebildeten Leitungen 2 können im Bausatz in abgestuften Längen bereitgehalten sein, so dass sich eine entsprechende Anpassung an verschiedene Dachgrössen ergibt. Unterschiedliche Wärmeausdehnungen zwischen den Rohren und den Blechen sowie dem Sammler werden durch die Schlauchstücke 3 ausgeglichen. Die haarnadelförmig ausgebildeten Leitungen 2 können jedoch auch aus mehreren Stücken bestehen. So kann beispielsweise die Krümmungsstelle 4 durch nicht dargestellte Verbinder mit den geraden Schenkeln der Leitungen 2 verbunden sein. Die Krümmungsstelle 4 kann auch durch ein Schlauchstück gebildet werden. Die gerade verlaufenden Schenkel der Leitungen 2 können auch aus mehreren Stücken bestehen, die beispielsweise durch Muffen miteinander verbunden werden. Insgesamt soll die Länge der haarnadelförmig ausgebildeten Leitungen 2 etwas geringer sein als die Entfernung von dem am First des Daches anzuordnenden Strang 1 bis zu der am Ende des Daches anzuordnenden Dachtraufe 5.

Ein besonderer Vorteil des Bausatzes gemäss der Erfindung liegt nun darin, dass er unmittelbar auf der Unterkonstruktion 6 eines Daches befestigt werden kann, wobei zur Geräuschdämmung und Abdichtung des Daches eine Zwischenlage 6a, z.B. eine Papplage oder Folie, aufgelegt werden kann.

Der Bausatz gemäss der Erfindung enthält nun weiterhin Abschlussauflagebleche 7, weiterführende Auflagebleche 8, Abdeckbleche 9 und Abschlussabdeckbleche 10.

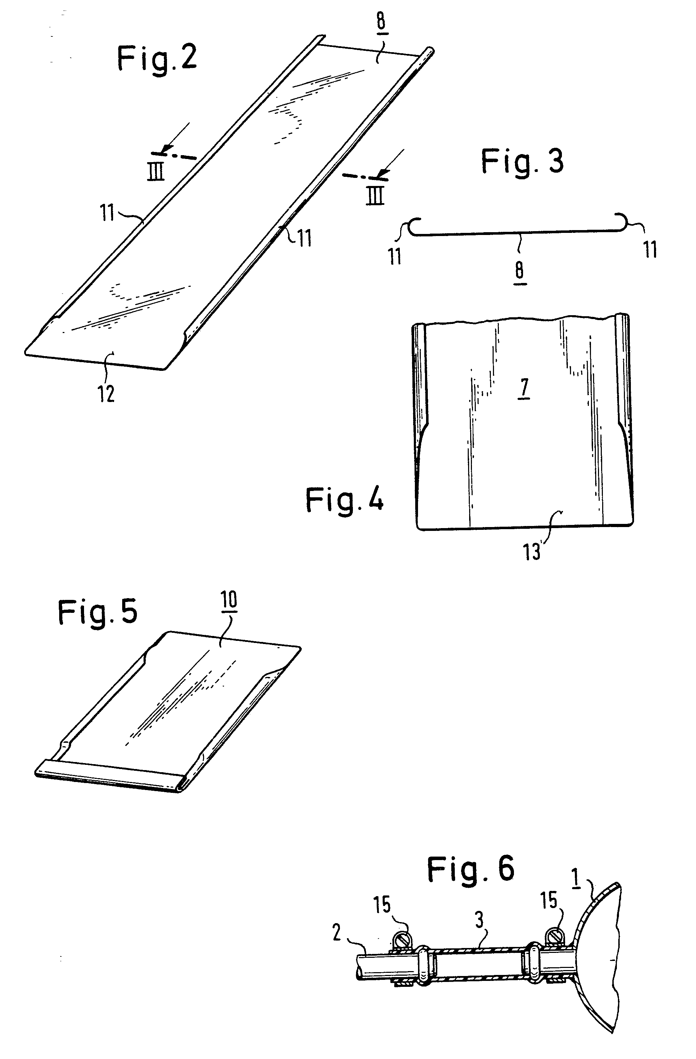

Aus den Fig. 2 und 3 ist ersichtlich, dass die Randbereiche 11 der weiterführenden Auflagebleche 8 hochgebogen sind. Am einen Ende 12 entfällt die Hochwölbung durch Ausstanzung. Dieser Bereich dient der Vernagelung des Auflagebleches 8 mit der Unterkonstruktion 6. Anschliessend wird ein weiteres Auflageblech 8 mit seinem Randbereich auf den Bereich 12 aufgelegt. Durch die Überlappung entsteht dementsprechend eine Abdichtung der Vernagelungsstelle; gleichzeitig entsteht durch die halbkreisförmige oder auch dreiviertelkreisförmige Hochwölbung eine mehr oder minder durchgehende Aufnahme für den geraden Steg der Leitung 2. Bei dem Abschlussauflageblech 7 kann, wie in Fig. 4 dargestellt ist, der Randbereich bei 13 etwas länger ausgespart sein, so dass genügend Platz für die Aufnahme der Krümmungsstelle 4 der Leitung 2 verbleibt. Es sei jedoch klargestellt, dass sich die Krümmung 4 über den Zwischenraum der Abschlussauflagebleche 7 jeweils zum benachbarten Abschlussauflageblech erstreckt.

Etwa in der Mitte zwischen je einem Auflageblech 8 wird nun eine Latte 14 angeordnet, die durch die Zwischenlage 6a auf die Unterkonstruktion 6 aufgenagelt werden kann. Anschliessend werden nun Abdeckbleche 9 auf die geraden Stege der Leitung 2 aufgeschoben und mit der Latte 14 vernagelt, wobei wiederum eine überlappende Anordnung der Abdeckbleche 9 gewählt werden kann, so dass die Nagelstellen abgedeckt sind. Zum Schluss werden die den Krümmungsbereich 4 der Leitung 2 überdeckenden Abschlussabdeckbleche 10 aufgeschoben. Die Abschlussauflagebleche 7 und die Abschlussabdeckbleche 10 sind an ihren Rändern entsprechend hakenförmig umgebogen, so dass sich ein sauberer Abschluss am Rand der Dachtraufe 5 ergibt.

Wenn die Stege der Leitungen 2 im Querschnitt kreisförmig sind, dann sind die Randbereiche der Auflagebleche und Abdeckbleche im allgemeinen ebenfalls halbkreisförmig oder dreiviertelkreisförmig gebogen, so dass sich eine satte Anlage der Abdeckbleche und der Auflagebleche an den geraden Stegen der Leitung 2 ergibt. Hieraus resultiert ein sehr guter Wärmeübergang von den Auflageblechen 8 und den Abdeckblechen 9 auf das in den Leitungen 2 strömende Wärmeaustauschmedium. Da in der Praxis die Breite der Auflagebleche 8 und der Abdeckbleche 9 etwa 30 cm beträgt, bedeutet dies, dass über das gesamte Dach hinweg eine maximale Wärmeflusstrecke von 15 cm nicht überschritten wird. Das Dach kühlt sich dementsprechend auch bei intensiver Wärmeentnahme gegenüber der Umlufttemperatur nur um wenige Grad Celsius ab. So konnte beispielsweise bei Wärmepumpenbetrieb bei einer Aussentemperatur von plus 5 °C und Vollheizung eines eingeschossigen Bungalowgebäudes eine maximale Abkühlung des Daches gegenüber der Aussentemperatur von 2 °C festgestellt werden. Bei Sonneneinstrahlung in den Sommermonaten ergeben sich bei einem Bungalow von etwa 200 qm Dachfläche und einem Schwimmbad mit etwa 30 m³ Wasserinhalt Verkürzungen in der Aufheizzeit von 1:10 bis 1:30, auch ohne Anwendung eines Wärmepumpenbetriebs im Vergleich zur Aufheizung des Schwimmbades durch die auf die Wasseroberfläche auffallende Sonnenstrahlung. Während also ein Schwimmbad dieser Grösse in den Sommermonaten bei durchgehendem Sonnenschein zur Erwärmung des Wassers von plus 17 °C auf plus 22 °C durchschnittlich drei Tage benötigt, reduziert sich dieses Erwärmungsintervall auf etwa drei bis fünf Stunden, wenn das Schwimmbadwasser über den Strang 1 und die Leitungen 2 gepumpt wird. Zusätzliche Aufwendungen sind dabei nicht erforderlich, da ja das Schwimmbadwasser zur Reinigung sowieso durch eine Umwälzpumpe umgewälzt wird. Da das gesamte Dach bei diesem Vorgang gekühlt wird, wird auch eine übermässige Erwärmung der unmittelbar unter dem Dach liegenden Räume vermieden. Bei einer Versuchsausführung erreichte die Wärmegewinnung bei Sonneneinstrahlung und 25 °C Aussentemperatur 2511 kJ/m²/h. Bei einer Aussentemperatur von +5 °C konnten über die Wärmepumpe pro 100 m² Klimafläche noch 5022 kJ/h erzielt werden.

Unter Bezugnahme auf Fig. 6 sei noch erwähnt, dass der Anschluss der geraden Stege der Leitungen 2 an den entsprechenden Kanal des Stranges 1 mittels eines Schlauchstückes 3 erfolgt, das durch Schlauchbinder 15 an den entsprechenden Rohrstutzen befestigt wird. Durch entsprechende Wahl der Länge des Schlauchstückes 3 kann eine entsprechende Anpassung und ein Ausgleich von Längenunterschieden vorgenommen werden.

Es sei noch erwähnt, dass die Leitungen 2 auch einen quadratischen, rechteckigen oder polygonalen Querschnitt besitzen können, wobei dann die hochgebogenen Ränder der Auflagebleche und der Abdeckbleche diesem Querschnitt angepasst werden.

Es ist aus Fig. 1 ersichtlich, dass bei dem Bausatz gemäss der Erfindung in dem Dach ein minimaler Platzbedarf zur Aufnahme der Leitungen 2 erforderlich ist. Im Vergleich also zu bekannten Klimadächern, bei denen voluminöse Konstruktionen erforderlich sind, fällt bei dem mit dem Bausatz gemäss der Erfindung hergestellten Dach die Erhöhung von beispielsweise 1,5 cm überhaupt nicht ins Gewicht; im Gegenteil, durch die abwechselnde Erhöhung des Daches im Bereich der Abdeckbleche 9 und Vertiefung des Daches im Bereich der Auflagebleche 8 ergibt sich eine Auflockerung der Dachstruktur, die architektonisch sehr ansprechend ist. Dem Dach ist von aussen kein Unterschied zu einem üblichen Blechdach anzusehen. Man kann auch nicht erkennen, dass es sich bei dem mit dem Bausatz hergestellten Dach um ein Klimadach handelt.

Die entsprechenden Bleche können aus Kupfer oder auch aus Aluminiumlegierungen bestehen. Sie können zur Erhöhung der Wärmeaufnahmefähigkeit in einem entsprechend dunklen Farbton gehalten sein. Die Bleche können auch durch Strangpressteile oder Kunststoffteile ersetzt sein. In diesem Fall können die Leitungen 2 bildende Kanäle in den Strangpressteilen vorgesehen sein.

Die Auflagebleche 8 und die Abdeckbleche 9 können identisch ausgebildet werden, wodurch sich der Bausatz entsprechend vereinfacht.

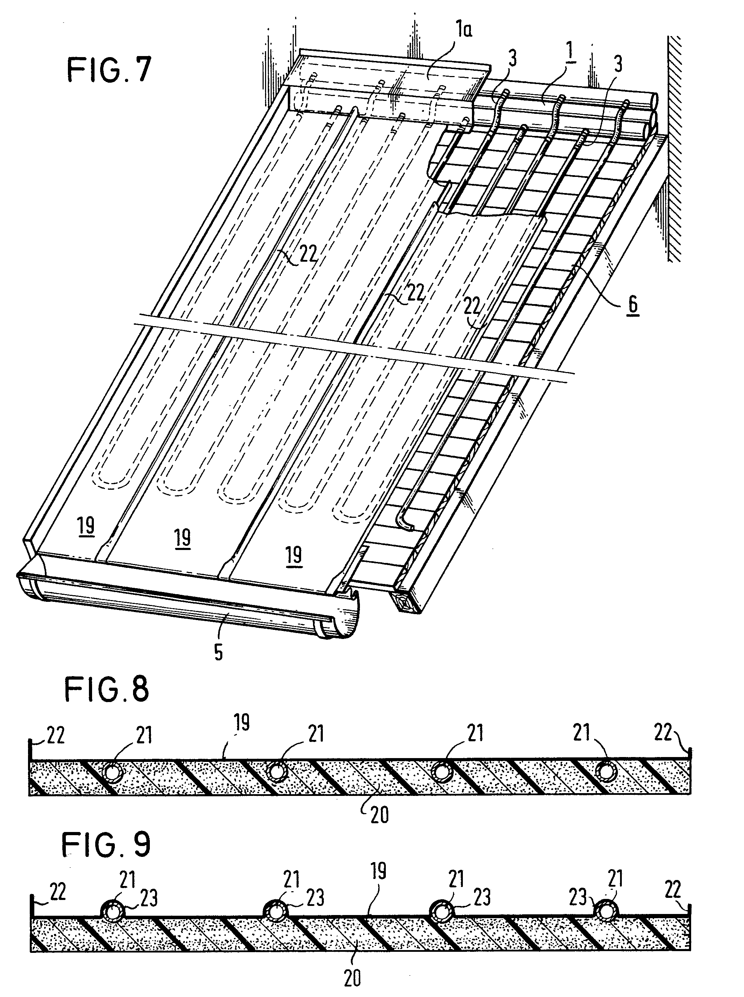

Die Fig. 7 bis 10 zeigen eine abgewandelte Ausführungsform. Die Elemente des Bausatzes bestehen, wie Fig. 8 und 9 zeigen, je aus einer Blechbahn 19, einer Kunstharzschaumschicht 20 und Rohren 21. Der Kunstharzschaumschicht 20 kommen dabei mehrere Funktionen zu, nämlich:
a) sie sorgt für eine entsprechende Anlage der Rohre 21 an der Blechbahn 19 oder verbessert diese. Die Rohre können im Falle der Fig. 8 also lose an die Blechbahn 19 angelegt sein. Es können jedoch auch verschiedene Arten von Hilfsverbindungen vorgesehen werden, z.B. Schweissverbindungen, Kaltverbindungen, Schellen oder dgl. In jedem Fall sichert die auf die Blechbahn 19 aufgespritzte oder aufgeklebte Kunstharzschaumschicht 20 dagegen, dass sich die Rohre 21 von der Blechbahn 19 lösen können;
b) die Schaumstoffschicht 20 verhindert ein Durchbiegen der Blechbahnen 19 beim Verlegen und beim Transport. Durch die Kunstharzschicht 20 werden also mit anderen Worten transportfähige und stapelfähige Elemente vorgesehen, die sich leicht handhaben lassen. So können beispielsweise je 20 oder 30 der dargestellten Elemente einer bestimmten Länge aufeinandergestapelt und mit einer Kunststoffolie verschlossen werden, wodurch sich ein leicht transportierbares Paket ergibt;
c) die Kunstharzschicht 20 sorgt für die entsprechende Wärmeisolation gegenüber der Dachunterseite und wirkt geräuschdämmend, beispielsweise bei auffallendem Regen.

Die Seitenkanten der Blechbahnen 19 sind, wie bei 22 dargestellt, nach oben umgebogen. Die Verbindung zweier benachbarter Blechbahnen erfolgt, wie in Fig. 7 dargestellt, dadurch, dass die hochgestellten Kanten 22 mittels eines üblichen fortlaufenden Werkzeuges umgebördelt werden. Es entsteht damit ein absolut wasserdichter Dachabschluss.

Die Ausführungsform der Fig. 9 unterscheidet sich von der Ausführungsform gemäss Fig. 8 dadurch, dass die Blechbahn 19 halbkreisförmige oder Ω-förmige Nuten 23 besitzt, in welche die Rohre 21 eingedrückt sind. Durch diese Ausbildung wird einerseits ein besserer Wärmeübergang auf die Rohre 21 sichergestellt, andererseits ergibt sich eine erhebliche Versteifung der Blechbahn, d.h. die Gefahr einer Durchbiegung oder Abbiegung in Längsrichtung wird vermindert.

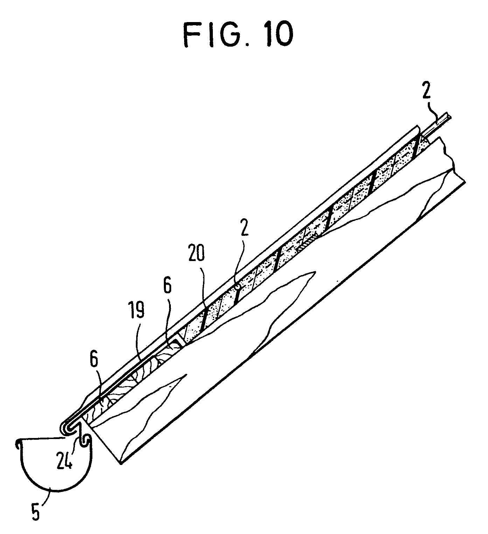

Fig. 10 zeigt einen Querschnitt des Dachtraufenabschlusses.

An das Ende der das Dach tragenden Balkenkonstruktion werden Schalbretter 6 in solcher Anzahl aufgenagelt, dass die Schmalkante der Kunstharzschaumschicht 20 eines Bauelementes ein entsprechendes Widerlager findet. Man kann also mit anderen Worten bei Elementen gestaffelter Länge einen entsprechenden Längenausgleich vornehmen, wenn der Abstand von dem Dachfirst 1a zur Dachtraufe 5 vorgegeben ist.

Zweckmässigerweise steht die Blechbahn 19 an dem unteren Ende um einen Betrag bis zu etwa 1 m vor, so dass die Latten 6 abgedeckt werden. Die überschüssige Länge kann z.B. mittels einer Blechschere abgeschnitten werden und dann der Rest um die Halterung 24 für die Dachtraufe 5 umgebördelt werden. Eine gegenüber Fig. 10 abgewandelte, nicht dargestellte, jedoch ebenfalls bevorzugte Ausführungsform besteht darin, dass die Stärke der Latten gegenüber der Stärke der Kunstharzschaumschicht 20 beispielsweise auf die Hälfte verringert ist. Die Kunstharzschaumschicht 20 wird dann in halber Stärke bis zum Ende der Blechbahn 19 weitergeführt. Sowohl bei der in Fig. 10 dargestellten Ausführungsform wie bei der beschriebenen abgewandelten Ausführungsform hat es sich als zweckmässig erwiesen, wenn eine wasserdichte Folie aus Kunststoff oder Metall an die Unterseite der Kunstharzschaumschicht 20 aufgeklebt wird. Dieser Vorgang kann selbstverständlich auch beim Aufschäumen der Kunstharzschaumschicht vorgenommen werden, so lange diese infolge ihrer Erwärmung noch klebefähig ist. Die Folie verhindert, dass Feuchtigkeit aus dem abgedeckten Raum in die Kunstharzschicht eindringen und sich dort an die gegenüber der Umgebung kühleren Rohre 2 als Kondenswasser niederschlagen könnte, was zu einem Korrosionsangriff an den Rohren 2 führen könnte. Die Folie ist etwas breiter als die Breite der Kunstharzschaumschicht 20, so dass die Ränder hochgeschlagen und an die Seitenkante der Kunstharzschaumschicht angeklebt werden können. Die gegenüber Fig. 10 abgewandelte beschriebene Ausführungsform hat nun den Vorteil, dass ebenfalls der über den Latten 6 liegende Bereich abgedichtet und isoliert ist.

Die beschriebenen Ausführungsformen haben gegenüber bekannten Konstruktionen folgende wesentliche Vorteile:
a) Die Elemente können in Form eines Bausatzes z.B. in zwei verschiedenen Breiten (z.B. 30 cm und 60 cm) in gestaffelten Längen mit je 1 m Unterschied (5 m, 6 m ... 12 m) bereitgehalten werden, wobei mit einer relativ geringen Zahl von Grundelementen fast sämtliche in der Praxis anfallenden Dachdeckungsprobleme gelöst werden können;
b) die Zahl der vorzunehmenden Anschlüsse wurde gegenüber bekannten Lösungen auf mehr als die Hälfte verringert;
c) sämtliche Anschlüsse liegen an einer einzigen Stelle, nämlich normalerweise im Dachfirst, wodurch die Montage und spätere Kontrollen oder Reparaturen wesentlich erleichtert werden. Die Zu- und Ableitung erfolgt über eine einzige Zulauf- bzw. Rücklaufleitung, die auch nachträglich leicht eingebaut werden kann. Andere Leitungen in den Seitenwänden oder Zwischenwänden des Gebäudes sind nicht erforderlich;

d) der im Dachfirst verlaufende Sammler liegt an der höchsten Stelle. Alle Leitungszüge haben gegenüber dem Sammler einen kontinuierlichen Abfall. Daraus ergibt sich, dass die Luft im System zwangsläufig in den Sammler aufsteigt, so dass eine Entlüftung an einer einzigen Stelle genügt.

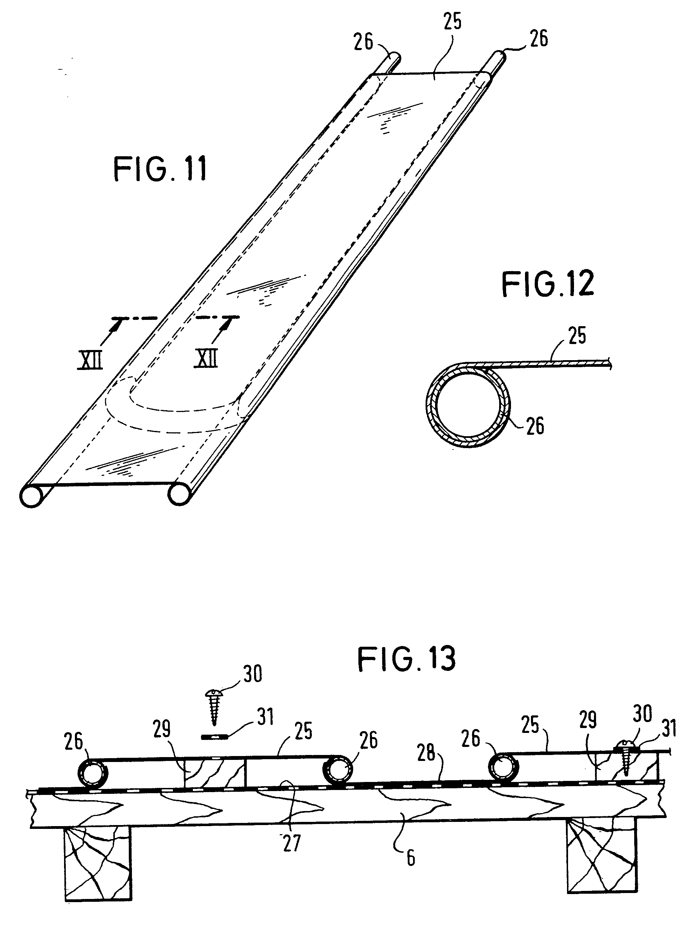

Bei der in den Fig. 11 und 12 dargestellten Ausführungsform sind die Randbereiche einer Blechbahn 25 um den vollen Umfang eines Rohres 26 umgebördelt. Dieser Arbeitsgang erfolgt in mehreren Arbeitsschritten, z.B. indem die Randbereiche der Blechbahn 25 zuerst senkrecht nach unten abgebogen werden, nach Einlegen des Rohres 26 erfolgt dann eine Umbördelung in satter Anlage an das Rohr 26 in zwei oder drei Arbeitsschritten. Die Ausführungsform bietet einerseits den Vorteil, dass die Rohre 26 mit den Blechen 25 fest verbunden sind, es sich also um ein entsprechend integriertes Bauelement handelt, das vom Dachdecker ohne Rücksichtnahme auf die Rohre 26 verlegt werden kann. Ein weiterer Vorteil liegt in der Verbesserung des Wärmeübergangs von den Blechen 25 auf die Rohre 26.

Die dargestellte Ausführungsform kann sowohl auf neu zu erstellende Dächer als auch auf bereits bestehende Dächer verlegt werden, wie dies in Fig. 13 dargestellt ist. Auf eine Dachhaut oder eine Isolierschicht 27 werden abwechselnd Auflagebleche 28, deren Seitenkanten halbkreisförmig hochgebogen sind, und die in den Fig. 12 und 13 dargestellten Bauelemente verlegt. Die Befestigung erfolgt über Leisten 29 und Schrauben 30, wobei ein Dichtring 31 für eine entsprechende Abdichtung der für die Schrauben 30 vorgesehenen Löcher sorgt. Beim Verlegen Bahn für Bahn werden die Bahnen nach der Seite hin gespannt, wodurch sich eine satte Anlage der gekrümmten Randbereiche der Elemente und eine entsprechende Abdichtung ergibt.

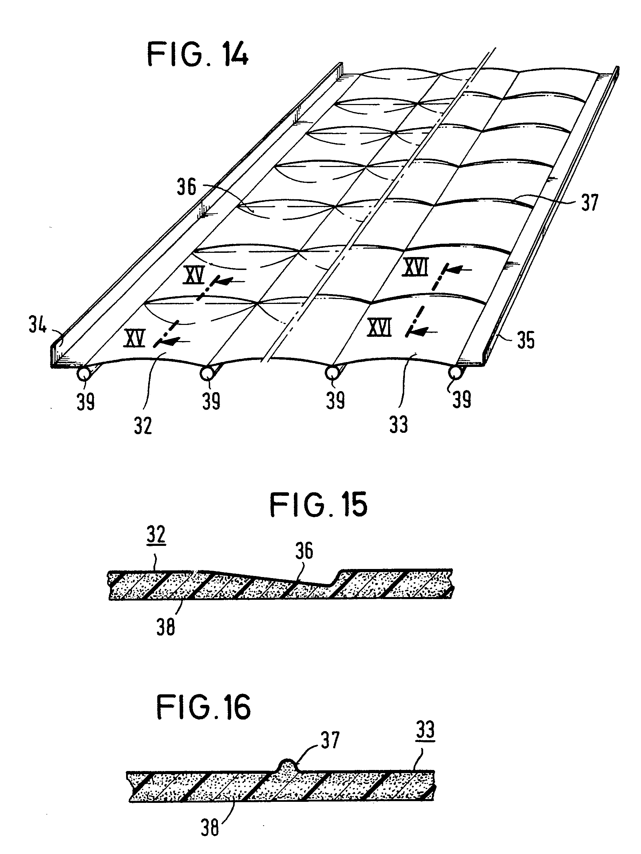

Bei den in Fig. 14 bis 16 dargestellten Ausführungsformen wird im optischen Gesamteindruck gesehen eine dachziegelförmige Struktur der Dachoberfläche angestrebt, und zwar einerseits, indem durch entsprechende Legierungsbeimengungen oder durch Behandlung der Oberfläche eine dunkelrote oder braune Farbe der Blechelemente angestrebt wird und andererseits, indem die Blechelemente entsprechend verformt werden. Die Praxis zeigte, dass der angestrebte Nachahmungseffekt weitgehend erfüllt werden kann. Es können dementsprechend Blechabdeckungen mit den entsprechenden Vorteilen der Wärmegewinnung auch in Siedlungen erstellt werden, die ansonsten Häuser mit Ziegelabdeckung besitzen, ohne dass das Gesamtbild gestört wird. Andererseits ergeben sich jedoch auch technische Vorteile. Durch die Dunkeltönung wird die Wärmegewinnung verbessert. Die Verformung der Blechbahnen ermöglicht eine gleichmässigere Wärmegewinnung über einen längeren Zeitraum, d.h. die Oberfläche ist dem unterschiedlichen Einfallswinkel des Sonnenlichtes besser angepasst.

Bei der dargestellten Ausführungsform sind Blechbahnen 32 oder 33 vorgesehen, deren Seitenkanten bei 34 bzw. 35 senkrecht nach oben abgebogen sind, so dass die Blechbahnen durch Umbördelung, ähnlich wie im Zusammenhang mit Fig. 7 beschrieben, miteinander verbunden werden können.

Die Blechbahn 32 ist nun in regelmässigen Abständen bei 36 eingedrückt, wie in Fig. 15 dargestellt. Die Blechbahn 33 besitzt Hochwölbungen 37, wie dies in der Fig. 16 dargestellt ist.

Durch die Verformung der Blechbahnen 32 bzw. 33 wird auch die Haftung einer gegebenenfalls vorgesehenen Kunstharzschicht 38 verbessert.

Die Blechbahnen 32 und 33 können noch, wie dies in der Fig. 14 dargestellt ist, in sich quer zur Längsrichtung gewölbt sein. Entsprechende Rohre 39 können an den Stosskanten der Wölbungen befestigt sein.

## Patentansprüche

1. Bausatz für Klimadächer oder Klimafassaden, die von einem Wärmeaustauschmedium durchströmt werden, mit Blechbahnen (8, 9) und Leitungen (2), welche sich in wärmeleitendem Kontakt mit denselben befinden, wobei die freien Enden der Leitungen (2) je an einem Vorlaufsammler bzw. einem Rücklaufsammler angeschlossen sind, dadurch gekennzeichnet, dass die Blechbahnen (8, 9) haarnadelförmig gebogene Leitungen (2) aufweisen, deren freie Enden mit dem Vor- bzw. Rücklaufsammler des Stranges (1) über dazwischengeschaltete Schlauchstücke (3) oder andere, dem Längenausgleich dienende Leitungsstücke verbunden sind.

2. Bausatz nach Anspruch 1, dadurch gekennzeichnet, dass der den Vor- bzw. Rücklaufsammler bildende Strang (1) im Dachfirst oder an der höchsten Stelle der Klimafassade untergebracht ist.

3. Bausatz nach Anspruch 1, dadurch gekennzeichnet, dass der Strang (1) weiterhin eine Druckausgleichsleitung enthält, die den auf den Durchfluss des Wärmeaustauschmediums durch die haarnadelförmigen Leitungen (2) bedingten Druckabfall so weit wie möglich ausgleicht.

4. Bausatz nach Ansprüchen 1 bis 3, dadurch gekennzeichnet, dass Auflagebleche (7, 8) vorgesehen sind, welche überlappende Bahnen bilden, die im Abstand voneinander vom First bis zur Dachtraufe (5) verlaufen, ferner dass Abdeckbleche (9, 10) vorgesehen sind, welche den Zwischenraum zwischen den Auflageblechen (8) überbrücken und deren Oberflächen in einem Abstand von den Oberflächen der Auflagebleche anzuordnen sind, der etwa dem Durchmesser der Leitungen (2) plus der Stärke der Abdeckbleche (9, 10) entspricht, wobei die Auflagebleche (7, 8) und/oder die Abdeckbleche (9, 10) Abstands- und Haltemittel besitzen, die einerseits den Wärmeübergang von den Blechen auf die Leitungen (2) ermöglichen und die andererseits den erwähnten Abstand der Oberfläche der Abdeckbleche (9, 10) von den Auflageblechen (7, 8) selbsttätig sichern.

5. Bausatz nach Anspruch 4, dadurch gekennzeichnet, dass die Abdeckbleche (10) die Krümmungsstellen (4) der haarnadelförmig geformten Leitungen (2) abdecken und die die versetze Anordnung der Auflagebleche (8) und der Abdeckbleche (9) am Traufenrand des Daches ausgleichen.

6. Bausatz nach Ansprüchen 4 und 5, dadurch gekennzeichnet, dass die Abstands- und Haltemittel durch Krümmungsbereiche (11) in den Auflageblechen (8) oder an den Randbereichen der Längskanten der Bleche gebildet sind.

7. Bausatz nach Anspruch 6, dadurch gekennzeichnet, dass je eine Schmalseite der Auflagebleche (7) über einen Bereich (13) frei von Abstands- und Haltemitteln, also insbesondere von Krümmungsbereichen, ist, so dass eine überlappende Anordnung der Bleche ermöglicht wird.

8. Bausatz nach Ansprüchen 1 bis 7, dadurch gekennzeichnet, dass die Randbereiche (11) der Auflagebleche (8) mindestens halbkreisförmig nach oben und die Randbereiche der Abdeckbleche (9) halbkreisförmig nach unten abgebogen sind und dass die abgebogenen Randbereiche je einen Teil des Umfanges der geraden Stege der Leitungen (2) umgreifen.

9. Bausatz nach Ansprüchen 1 bis 8, dadurch gekennzeichnet, dass die Auflagebleche (8) unmittelbar auf der Unterkonstruktion (6) des Daches, gegebenenfalls unter Zwischenlage einer geräuschdämmenden und abdichtenden Schicht (6a) z.B. einer Papplage oder Folie, befestigt werden.

10. Bausatz nach Ansprüchen 1 bis 9, dadurch gekennzeichnet, dass die haarnadelförmig ausgebildeten Leitungen (2) aus zwei geraden Rohrschenkeln bestehen, die an der Krümmungsstelle durch ein Schlauchstück oder eine Verbindungsleitung miteinander verbunden werden.

11. Bausatz nach Ansprüchen 1 bis 10, dadurch gekennzeichnet, dass die Leitungen (2) in den Auflageblechen (7, 8) und/oder in den Abdeckblechen (9, 10) enthalten oder mit diesen dauerhaft verbunden sind, z.B. in Form von stranggepressten Kanälen.

12. Bausatz nach Ansprüchen 1 bis 11, dadurch gekennzeichnet, dass bei Fassaden die haarnadelförmig ausgebildeten Leitungen (2) senkrecht in der Fassadenwand verlaufen.

13. Bausatz nach Anspruch 1, dadurch gekennzeichnet, dass die Elemente des Bausatzes je aus einer Blechbahn (19) oder einer Strangpressprofilbahn, aus einem oder mehreren, parallel zueinander verlaufenden haarnadelförmigen Rohren (21) und aus einem auf die Unterseite der Blechbahn (19) aufgeklebten oder aufgespritzten Kunststoffschaumkörper (20) bestehen, wobei der Kunststoffschaumkörper (20) in Verbindung mit den Rohren (21) die Blechbahn (19) gegen Durchbiegung beim Transport und beim Verlegen stabilisiert, die Verbindung der Rohre (21) zu der Blechbahn (19) herstellt oder unterstützt und die erforderliche Wärmeisolation gegenüber dem Dachinneren liefert.

14. Bausatz nach Anspruch 1 oder 13, dadurch gekennzeichnet, dass die haarnadelförmigen Rohre (21) in halbrundförmige oder Ω-förmige Nuten (23) der Blechbahn (19) eingedrückt sind.

15. Bausatz nach Ansprüchen 13 und 14, dadurch gekennzeichnet, dass der Kunststoffschaumkörper (20) an seiner Unterseite und an seinen Seitenkanten eine dampfdichte Folie, vorzugsweise aus Kunststoff oder Metall, trägt, welche eine Dampfsperre für den unter dem Dach liegenden Raum liefert.

16. Bausatz nach Ansprüchen 6 oder 8, dadurch gekennzeichnet, dass die seitlichen Ränder eines der Bleche (25) um den gesamten Umfang des haarnadelförmigen Rohres (26) eng anliegend herumgebördelt sind und dass jeweils die benachbarten Bleche (28) mit ihren gekrümmten Rändern in diese Blech-Rohr-Verbindung eingehängt und nach der Seite hin verspannt sind.

17. Bausatz nach Ansprüchen 1 bis 16, dadurch gekennzeichnet, dass die Oberfläche der Bleche (32, 33) eine ziegelartige Struktur besitzt.

18. Bausatz nach Ansprüchen 1 bis 17, dadurch gekennzeichnet, dass die haarnadelförmigen Rohre als Verbindungs-, Trag- und/oder Versteifungselemente für die Blechbahnen dienen.

19. Verwendung eines Bausatzes nach Ansprüchen 1 bis 18 zur Bildung eines grossflächigen Verdampfers für ein Wärmeaustauschmedium, dessen Siedetemperatur beim Betriebsdruck unter etwa –30 °C liegt.

20. Bausatz zur Ergänzung eines bestehenden Daches nach Ansprüchen 1 bis 19, dadurch gekennzeichnet, dass die Elemente je eine längsverlaufende Leiste (29) besitzen, welche auf dem bestehenden Dach vorzugsweise durch Schraubung oder Nagelung befestigt werden kann.

**Patent Claims**

1. A construction assembly for climatic-conditioning roofs or climatic-conditioning facades through which a heat-exchange medium is passed, with sheet-metal strips (8, 9) and conduits (2) in heat-conducting contact therewith, the free ends of the conduits (2) being each connected to a forward flow collector-line or a return flow collector-line, respectively, characterised in that the sheet-metal strips (8, 9) are provided with conduits (2) bent into hairpin shape and having their free ends connected to the forward flow or return flow collector-lines of the set of pipes (1) through interdisposed hose pipe sections (3) or other pipe sections serving to compensate the length.

2. A construction assembly according to claim 1, characterised in that the set of pipes (1) forming the forward flow or return flow collector-lines is disposed within the roof ridge or at the highest point of the climatic-conditioning facade.

3. A construction assembly according to claim 1, characterised in that the set of pipes (1) further includes a pressure compensating conduit for compensating, as far as possible, the pressure drop caused by the flow of heat-exchange medium through the hairpin-shaped conduits (2).

4. A construction assembly according to claim 1, characterised in that supporting metal sheets (7, 8) are provided, forming overlapping strips extending in spaced relationship with respect to each other from the roof ridge to the roof eaves and that furthermore, covering metal sheets (9, 10) are provided, which bridge the intermediate space between the supporting metal sheets (8) and are to have their surfaces disposed at a distance from the surfaces of the supporting metal sheets corresponding approximately to the diameter of the conduits (2) plus the thickness of the covering metal sheets (9, 10), the supporting metal sheets (7, 8) and/or the covering metal sheets possessing spacing and supporting means, which, on the one hand, render possible the heat transfer from the sheets to the conduits (2) and, on the other hand, automatically ensure said spacing of the surface of the covering metal sheets (9, 10) from the supporting metal sheets (7, 8).

5. A construction assembly according to claim 4, characterised in that the covering metal sheets (10) cover the bend portions (4) of the conduits (2) formed into hairpin shape and compensate the stepped arrangement of the supporting metal sheets (8) and the covering metal sheets (9) at the edge of the roof eaves.

6. A construction assembly according to claims 4 and 5, characterised in that the spacing and supporting means are formed by curved regions (11) of the supporting metal sheets (8) or at the edge portions of the longitudinal edges of the metal sheets.

7. A construction assembly according to claim 6, characterised in that a narrow side of each of the supporting metal sheets (7) is free from spacing and supporting means within a region (13), i.e. particularly from curved regions, so that an overlapping arrangement of the metal sheets is rendered possible.

8. A construction assembly according to claims 1 to 7, characterised in that the edge regions (11) of the supporting metal sheets (8) are curved upwards at least semicircularly and the edge regions of the covering metal sheets (9) are bent downwards semicircularly, and that the curved edge regions each pass around a portion of the periphery of the straight sections of the conduits (2).

9. A construction assembly according to claims 1 to 8, characterised in that the supporting metal sheets (8) are secured directly to the lower structure (6) of the roof, possibly with the interposition of a sounddamping and sealing layer (6a), for example a cardboard layer or a foil.

10. A construction assembly according to claims 1 to 9, characterised in that the conduits (2) formed into hairpin shape consist of two straight tubular legs joined together at the bend portion by a hose pipe section or a connecting pipe.

11. A construction assembly according to claims 1 to 10, characterised in that the conduits (2) are contained within the supporting metal sheets (7, 8) and/or in the covering metal sheets (9, 10) or are permanently joined thereto, for example in the form of extruded channels.

12. A construction assembly according to claims 1 to 11, characterised in that in the case of facades the conduits (2) formed into hairpin shape extend vertically within the facade wall.

13. A construction assembly according to claim 1, characterised in that the elements of the construction assembly each consist of a sheet-metal strip (19) or an extruded profile strip, one or more hairpin-shaped pipes (21) extending in parallel, and a foamed plastic body (20) adhesively attached or sprayed on to the underside of the sheet-metal strip (19), wherein the foamed plastic body (20), together with the pipes (21), stabilizes the sheet-metal strip (19) against bending during transportation and mounting, establishes or facilitates the connection of the pipes (21) to the sheet-metal strip (19) and provides the necessary heat insulation against the inside of the roof.

14. A construction assembly according to claim 1 or 13, characterised in that the hairpin-shaped pipes (21) are pressed into semicircular shaped or $\Omega$-shaped grooves (23) of the sheet-metal strip (19).

15. A construction assembly according to claims 13 and 14, characterised in that the foamed plastic body (20) carries on its underside and at its side edges a vapour-tight foil, preferably of plastic or metal, which provides a vapour barrier for the space below the roof.

16. A construction assembly according to claims 6 or 8, characterised in that the side edges of one of the metal sheets (25) are flanged tightly around the entire circumference of the hairpin-shaped pipe (26) and that each of the neighbouring sheets (28) has its curved edges hooked into this sheet-tube-joint and is stretched sideways.

17. A construction assembly according to claims 1 to 16, characterised in that the surface of the sheets (32, 33) has a brick-like structure.

18. A construction assembly according to claims 1 to 17, characterised in that the hairpin-shaped pipes serve as connecting, supporting and/or reinforcing elements for the sheet-metal strips.

19. Use of a construction assembly according to claims 1 to 18 for forming a large-surface evaporator for a heat-exchange medium having a boiling temperature below about −30 °C under operational pressure.

20. A construction assembly for supplementing an existing roof according to claims 1 to 19, characterised in that the elements each have a longitudinally extending bar which is attachable to the existing roof preferably by screwing or nailing.

**Revendications**

1. Jeu d'éléments de construction pour toits de climatisation ou façades de climatisation, parcourus par un fluide d'échange thermique et comportant des bandes de tôle (8, 9) et des canalisations (2) en contact de conduction thermique les unes avec les autres, les extrémités libres des canalisations étant respectivement raccordées à un collecteur d'arrivée et à un collecteur de retour, caractérisé en ce que les bandes de tôle (8, 9) comportent des canalisations (2) dont les extrémités libres sont reliées au collecteur d'arrivée et au collecteur de retour du faisceau de tuyaux (1) par l'intermédiaire de portions de tuyaux souples (3) ou d'autres éléments de canalisations intercalés, servant à compenser les différences de longueur.

2. Jeu d'éléments selon la revendication 1, caractérisé en ce que le faisceau de tuyaux (1) constituant le collecteur d'arrivée et le collecteur de retour est logé dans le faîte du toit ou au point le plus haut de la façade de climatisation.

3. Jeu d'éléments selon la revendication 1, caractérisé en ce que le faisceau de tuyaux (1) comporte en outre une canalisation d'équilibrage de pression qui compense dans la mesure du possible la chute de pression provoquée sur le parcours du fluide d'échange thermique par les canalisations (2) en forme d'épingles à cheveux.

4. Jeu d'éléments selon l'une quelconque des revendications 1 à 3, caractérisé en ce qu'on prévoit des plaques d'appui en tôle (7, 8) qui constituent des bandes se chevauchant qui s'étendent, écartées l'une de l'autre, du faîte jusqu'à la gouttière (5) du toit, qu'on prévoit en outre des plaques de tôle de recouvrement (9, 10) qui recouvrent l'intervalle entre les plaques d'appui (8) et dont les surfaces doivent être placées à une distance des surfaces des plaques d'appui qui correspond à peu près au diamètre des canalisations (2) plus l'épaisseur des plaques de recouvrement (9, 10), les plaques d'appui (7, 8) et/ou les plaques de recouvrement (9, 10) comportant des moyens d'écartement et de maintien qui, d'une part, permettent la transmission de la chaleur des plaques de tôle aux canalisations (2) et, d'autre part, assurent automatiquement la distance mentionnée ci-dessus entre la surface des plaques de recouvrement (9, 10) et les plaques d'appui (7, 8).

5. Jeu d'éléments selon la revendication 4, caractérisé en ce que les plaques de recouvrement (10) recouvrent les parties coudées (4) des canalisations (2) en forme d'épingles à cheveux et compensent le décalage des plaques d'appui (8) et des plaques de recouvrement (9) sur le bord de gouttière du toit.

6. Jeu d'éléments selon les revendications 4 et 5, caractérisé en ce que les moyens d'écartement et de maintien sont constitués par des zones incurvées (11) dans les plaques d'appui (8) ou sur les zones de bord des arêtes longitudinales des plaques de tôle.

7. Jeu d'éléments selon la revendication 6, caractérisé en ce qu'à chaque fois, un côté étroit de la plaque d'appui (7) se trouve sur une zone (13) dépourvue de moyens d'écartement et de maintien, donc notamment de zones coudées, ce qui permet aux plaques de se chevaucher.

8. Jeu d'éléments selon les revendications 1 à 7, caractérisé en ce que les zones de bord (11) des plaques d'appui (8) sont recourbées au moins en demi-cercle vers le haut, et les zones de bord des plaques de recouvrement (9) sont recourbées au moins en demi-cercle vers le bas, et que les zones de bord recourbées entourent chaque fois une partie de la périphérie des parties rectilignes des canalisations (2).

9. Jeu d'éléments selon l'une quelconque des revendications 1 à 8, caractérisé en ce que les plaques d'appui (8) sont fixées directement sur l'infrastructure (6) du toit, le cas échéant en intercalant une couche d'insonorisation et d'étanchéité (6a), par exemple une couche de carton ou une feuille.

10. Jeu d'éléments selon l'une quelconque des revendications 1 à 9, caractérisé en ce que les canalisations (2) en forme d'épingles à cheveux sont constituées par deux branches de tubes rectilignes, qui sont reliées ensemble à l'endroit du coude par une portion de tuyau souple ou une canalisation de liaison.

11. Jeu d'éléments selon l'une quelconque des revendications 1 à 10, caractérisé en ce que les canalisations (2) sont incorporées dans les plaques d'appui (7, 8) et/ou dans les plaques de recouvrement (9, 10) ou sont reliées de façon permanente à celles-ci, par exemple sous forme de conduits réalisés par extrusion.

12. Jeu d'éléments selon l'une quelconque des revendications 1 à 11, caractérisé en ce que, dans les façades, les canalisations (2) en forme d'épingle à cheveux s'étendent verticalement dans le mur de façade.

13. Jeu d'éléments selon la revendication 1, caractérisé en ce que les éléments du jeu sont respectivement constitués par une bande de tôle (19) ou une bande profilée extrudée, par un ou plusieurs tubes (21) en forme d'épingles à cheveux parallèles entre eux, et par un corps en matière cellulaire (20) injecté ou collé sur le côté inférieur de la bande de tôle (19), le corps de matière cellulaire (20) stabilisant la bande de tôle (19) en liaison avec les tubes (21) et l'empêchant de s'infléchir lors du transport et de la pose, assurant la liaison des tubes (21) avec la bande de tôle (19), ou y contribuant, et procurant l'isolation thermique nécessaire par rapport à l'intérieur du toit.

14. Jeu d'éléments selon la revendication 1 ou la revendication 13, caractérisé en ce que les tubes (21) en forme d'épingles à cheveux sont enfoncés dans des gorges (23) semi-circulaires ou en forme de Ω de la bande de tôle (19).

15. Jeu d'éléments selon la revendication 13 et la revendication 14, caractérisé en ce que le corps en matière cellulaire porte sur son côté inférieur et sur des bords latéraux une feuille étanche à l'humidité, de préférence en matière plastique ou en métal, qui constitue une barrière à l'humidité pour le volume se trouvant sous le toit.

16. Jeu d'éléments selon la revendication 6 ou la revendication 8, caractérisé en ce que les bords latéraux d'une des plaques de tôle (25) sont rabattus autour de la totalité de la périphérie du tube (21) en forme d'épingle à cheveux et s'y appliquent étroitement, et que chaque fois les plaques de tôle voisines (28) sont accrochées par leurs bords incurvés dans cette liaison plaque-tube et sont bridés sur leurs côtés.

17. Jeu d'éléments selon l'une quelconque des revendications 1 à 16, caractérisé en ce que la surface des plaques de tôle (32, 33) a une structure en forme de tuiles.

18. Jeu d'éléments selon l'une quelconque des revendications 1 à 17, caractérisé en ce que les tubes en forme d'épingles à cheveux servent d'éléments de liaison, d'éléments porteurs et/ou d'éléments de raidissement pour les bandes de tôle.

19. Utilisation d'un jeu d'éléments selon l'une quelconque des revendications 1 à 18 pour former un évaporateur de grande surface pour un fluide d'échange thermique, dont la température d'ébullition, à la pression de service, est située en-dessous de –30 °C environ.

20. Jeu d'éléments pour compléter un toit existant, selon l'une quelconque des revendications 1 à 19, caractérisé en ce que les éléments comportent chacun une baguette (29) s'étendant dans le sens longitudinal, ces baguettes pouvant être fixées sur le toit existant de préférence par des vis ou des clous.

**Fig.1**

0 000 543

Fig.2

Fig. 3

Fig. 4

Fig. 5

Fig. 6

13

0 000 543

FIG. 7

FIG. 8

FIG. 9

15

# FIG. 10

FIG. 11

FIG.12

FIG.13

# FIG. 14

# FIG. 15

# FIG. 16